# EUROPEAN PATENT APPLICATION

(11) **EP 1 243 445 A1**
(43) Date of publication of application: **25.09.2002**
(21) Application number: 01830195.2
(22) Date of filing: 21.03.2001
(51) Int. Cl.: B60C 23/00

(54) **Pressure controlling and adjusting system for tyres, particularly for motor vehicles**

(71) Applicant: Baldo, Massimo, 11027 Saint Vincent (AO) (IT)
(72) Inventor: Baldo, Massimo, 11027 Saint Vincent (AO) (IT)
(74) Representative: Garavelli, Paolo

(57) **Abstract**

A pressure controlling and adjusting system (1) for tyres (3), particularly for motor vehicles, is disclosed, that comprises: control means (44); pressure displaying means (46) for tyres (3); compressor means (38) adapted to blow air inside the tyres (3) to change their pressure; sensor means (34) adapted to perform a pressure check; means (32) for expelling air from inside the tyres (3) to change their pressure; and valve means (7) adapted to enable/disable a connection between the system (1) and each tyre (3) in order to blow/suck air to/from inside the tyres (3) to change their pressure. The system of the invention does not imply any type of modification on the vehicle such as to change its external appearance.

## Description

The present invention refers to a pressure controlling and adjusting system for tyres, that can be used particularly on any type of motor vehicle.

Various types of systems, that are more or less automated, are known in the art to control the tyre pressure, in order to avoid the early bursting of the tyre due to overheating, wear or other reasons, to make vehicle driving safer. Such systems usually provide various types of sensor means connected to on-board units or computers, in order to signal and eventually display to a user the pressure inside the tyres.

These systems however are not satisfactory, since they both usually provide complex and costly control systems, and because the pressure sensors are difficult to be realised and kept operating (also given the "wearing" position in which they are located) in order to provide meaningful results.

No systems instead can be found in the art that allow, in addition to checking the pressure inside a tyre, also adjusting the pressure itself, by immediately inflating/deflating the tyre in case of need.

Object of the present invention is solving the above prior-art problems by providing a pressure controlling and adjusting system for tyres that has a simple and inexpensive construction, and that can be easily adapted to current and future motor vehicle designs.

A further object of the present invenzion is providing a controlling and adjusting system as mentioned above that allows both controlling and adjusting the pressure inside the tyres, thereby enabling to solve difficult situations, such as the puncture of the tyres themselves.

The above and other objects and advantages of the invention, as will appear from the following description, are obtained by a tyre pressure controlling and adjusting system as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a schematic view that shows the main components of a first preferred embodiment of the system of the present invention that can be applied to the steering wheels;
- Figure 2 is a front shcematic view of a tyre to which the system of the present invention is applied; and
- Figure 3 is a schematic view that shows the main components of a second preferred embodiment of the system of the present invention that can be applied to the non-steering wheels.

With reference to the Figures, two currently preferred, but non-limiting embodiments of the system of the present invention are shown. Obviously, for a skilled person in the art, it will be immediately clear that such system can be realised in any way and using the same or other equivalent components in order to practise the teaching of the invention.

According to the preferred embodiments shown in Fig.s 1 and 2, the controlling and adjusting system 1 for the pressure of tyres 3, particularly for motor vehicles, is adapted to be used with wheels equipped with rims 5, which will not aesthetically appear different from the currently existing ones, and will instead only be equipped with more functionalities. In fact, the rims 5 will be equipped with a duct 20 inside one of their spokes, that will directly communicate in its upper part with the tyre 3 interior, and in its lower part with a check ball 14, whose task will be maintaining the pressure into the tyre 3 when there is no operating connection with the system 1.

The system 1 is further equipped with a valve 7 comprising at one end thereof a connection ball 9 adapted to cooperate with the ball 14 that is present on the rim 5 in order to open and close the compressed air circuit. The valve 7 is further equipped in 100 with a coupling of the bayonet or thread type, in which the thread type of coupling will be realised depending on the centrifugal force, in order to prevent it from being unscrewed when the wheels rotate. The valve 7 is further preferably equipped in 11 with a quick coupling, that allows it, once having been inserted into the rim 5, to be engaged into an internal quick connection 13 of the axle shaft 21 to which the wheel with the tyre 3 is connected. The valve 7 further comprises, at its opposite end with respect to the quick coupling 11, a slot 16 to insert therein a screwdriver or similar means for securing the valve to the rim 5. The rim 5 is further equipped, in a known way, with holes 18 for securing bolts to the body. The valve 7 operates in order to make air supply to the tyre possible through a quick connection between 11 and 13, thereby connecting the rim 5 to the axle shaft 21: for such purpose, object of the ball 9 is preventing the circuit from dropping the pressure when the valve 7 is inserted into its seat through the quick coupling in 11 and 13.

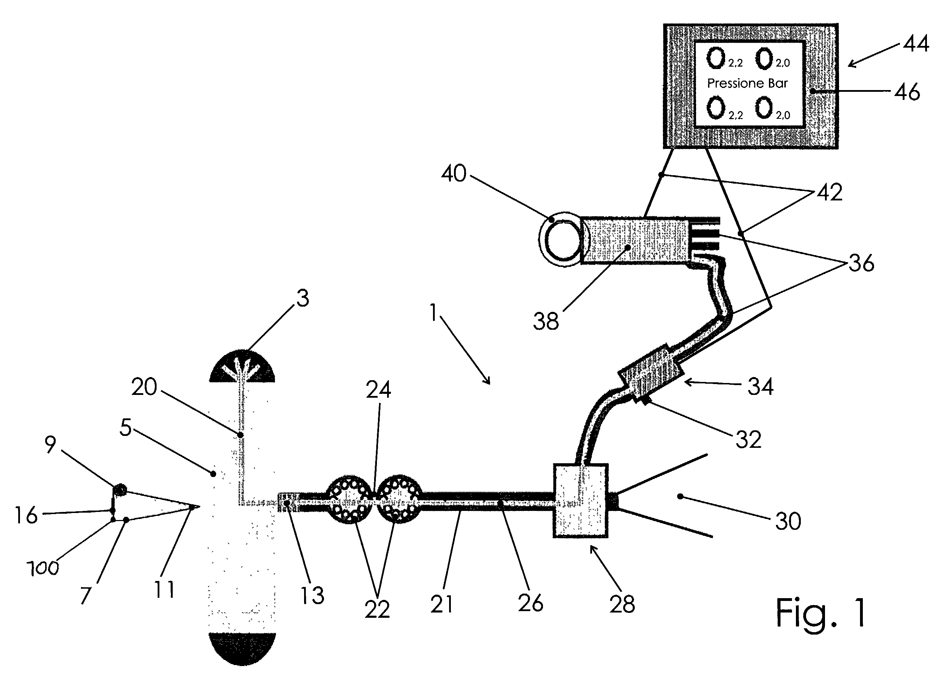

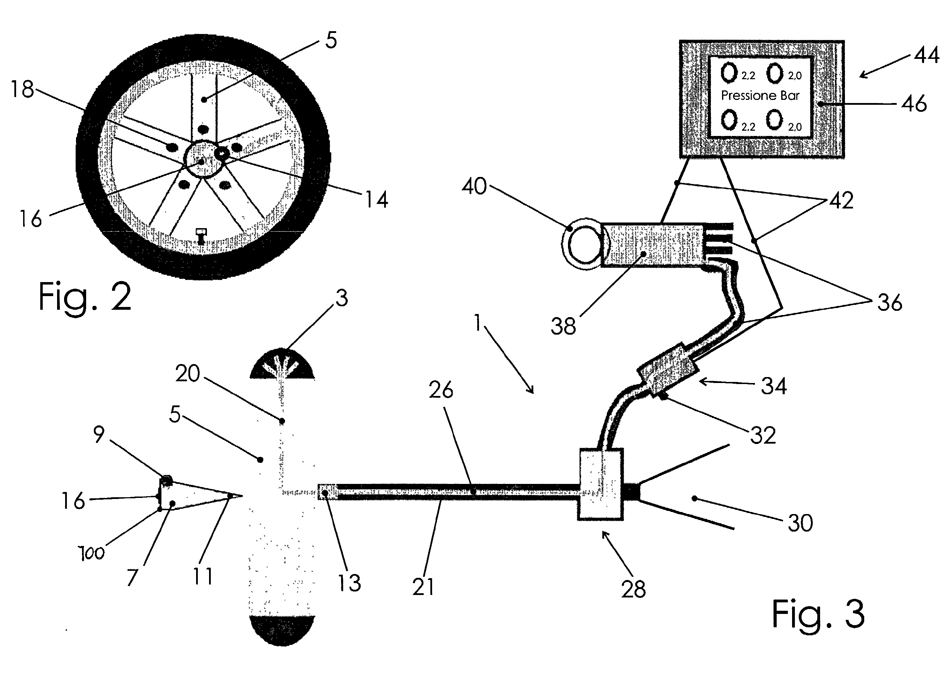

As regards the part of the system 1 of the invention that can be found "on the body", on the axle shaft 21 of each tyre 3 of the steering wheels a joint 22 is provided through which a flexible pressure hose 24 passes (as can be better seen in Fig. 1), for example made of rubber or equivalent material, whose function is making air pass and simultaneously keeping the movement of the joint 22 free; where instead the wheels are not of the steering type (Fig. 3), the axle shaft 21 does not provide for joints 22 and is simply traversed by the compressed air duct 26, as also occurs in the embodiment in Fig. 1. For such purpose the axle shaft 21 must obviously be drilled in order to allow the passage of compressed air inside it.

At the end of the axle shaft 21 and connected thereto, a block or casting 28 is provided that, when operating, remains fixed while the axle shaft 21 connected thereto rotates. The block 28 is connected to the axle shaft 21 that in turn is downstream connected (in 30) to engine and gearbox (not shown) of the motor vehicle.

The block 28 is further connected, through a pressure pipe 36, to a small electric valve 32 adapted to expel air from the circuit when it is necessary to reduce the pressure; moreover, the block 28 is connected to a solenoid valve 34 that also works as pressure sensor/probe to detect at any time the pressure in the circuit and therefore in the tyres 3. Globally, the solenoid valve 34 will perform three different functions: managing the compressed air inflow; expelling, through the small valve 32, the excess air according to the driver's needs; and transmitting the exact pressure of the tyre 3 to an electric unit 44 for being displayed on the display 46.

The solenoid valve 34 is connected, always through the pressure pipes 36 and in order to form a single pressure circuit, to a compressor 38 of the mechanical and/or electric type, that is equipped with an electromagnet and a pulley 40 connected to the motive force through a belt (not shown). In a variation of the invention that is not shown, the compressor 38 will instead get its motive force from an electric current, wholly operating as a common electric motor, always subjected to the unit 44 management. The compressor 38, as can be seen in Fig.s 1 and 3, is equipped with a plurality (commonly four) of openings for the connection to each respective motor vehicle tyre 3 through a circuit like the one being shown. Through such circuit, the compressor 38 will blow air with a higher pressure than the one normally required by the vehicle tyres, and such air will be distributed to the tyres 3 according to needs. The electromagnet with which the compressor 38 is equipped is used to avoid this latter one from being always operating when its movement is not necessary, thereby highly decreasing the force taken from the vehicle engine and the related consumptions.

Through electric cables 42, the solenoid valve 34 and the compressor 38 are then connected to an electric control unit 44 (specifically realised for such purposes in a known way through printed circuit technologies, relays in various models and powers and other similar components), equipped with control buttons (not shown) and displaying means 46, for example of the display type, such as to show the pressure values of the individual tyres and visually (for example through red-coloured LEDs) and/or acoustically signalling when these values exceed, in excess or in defect, the normal design thresholds: in such a way the driver, also in case of a punctured tyre 3, will be able to go on supplying air to the tyre through the compressor 38 and, without stopping to replace the punctured tyre 3, will be able to reach, with due care, an authorised center in which the faulty tyre 3 can be replaced or repaired. The buttons with which the unit 44 is equipped will allow the driver to set the pressure calibration of the single tyres 3, in order to be able to eventually change it according to needs. The unit 44 will be able to be further equipped with a temperature probe (not shown) to detect the external temperature, thereby automatically changing the pressure, in order to realise the best adherence of the tyre 3 to the road.

The unit 44 will allow managing the necessary commands to operate the system of the invention in a variable way according to individual manufacturers' needs. Preferably, but in a non-limiting way, the commands will as a minimum be as follows:
a) a setting that is directly arranged by the manufacturing company with suitable pressure values for the type of vehicle and its tyres;
b) an intervention arrangement that is manual or with memory systems, through buttons to manage the tyre pressure with the chance of increasing or decreasing the tyre pressure;
c) the chance for the unit 44 to automatically keep the required pressure constant even in case of tyre puncture or for any unforeseen reason.

Moreover, the system of the invention can be also used to provide one or more compressed air intakes (not shown) for various uses, by increasing the compressor even only by one or more outlets.

Finally, the system of the invention will also allow keeping under control those vehicles that do not use compressed air for pressurising their tyres, but use gas to improve performances of the tyres themselves: in these vehicles it will be sufficient to insert a tank for these gases, where the compressor will take gas in place of common air, paying attention to periodically fill-in such spare tank.

The operation of the system according to the present invention will now be described.

The compressor 38, once having been activated by the unit 44, produces a higher pressure than the one needed for inflating the tyres. The thereby-generated compressed air passes through the pressure pipe 36 and the duct 26: then, through the pressure hose 24, it passes the joint 22 (in the wheels of the steering type) and, through the valve 7 screwed in its operating position, inflates the tyre 3 (or deflates it through the reverse path and the exhaust from the small valve 32).

The system 1 of the invention, as described above, allows obtaining numerous benefits: in fact, its application on a motor vehicle will allow the driver, through the unit 44 and the display 36, to display the exact current pressure of every individual tyre 3, and to be able to eventually automatically or manually modify it. In case of tyre puncture, the system 1 will automatically take care of performing a continuous compressed air supply to the punctured tyre 3, thereby avoiding to lose high amounts of pressure and visually and/or acoustically warning about the tyre 3 failure, thereby avoiding a sudden loss of vehicle control due to a possible tyre puncture, and allowing the driver to go to the nearest assistance center in order to perform the due repairs, keeping the tyre 3 unaltered. Moreover, the system 1 of the invention will avoid the driver to uncomfortably have to stop and lose time for replacing the punctured tyres 3, and is adapted to be coupled with other known arrangements (such as for example document T02000A000216 of the same Applicant of the present invention) that enable to wholly do without the car-lifting jack.

Also in case of healthy tyres 3, the system 1 of the invention allows always obtaining the optimum inflating pressure for them according to the season and the motor vehicle load, always guaranteeing the maximum driving safety and the optimum road adherence for the vehicle, and avoiding the periodic stops by the service stations in order to check the tyre 3 pressure.

Some preferred embodiments of the present invention has been shown and described above: obviously, for the skilled people in the art, it will be immediately clear that there could be numerous variations and modifications, that are functionally equivalent to the previous ones, that fall within the scope of the invention as pointed out in the enclosed Claims. For example, in case of non-driving wheels, instead of operating on the axle shaft 21 for supplying air, it will be possible to provide a device (not shown, and for example realised shaped as a funnel), applied to every wheel, which, through a suitable small pipe and quick coupling, will allow maintaining the wheel at the desired pressure, thereby avoiding to insert a non-existing axle shaft.

A further alternative provides that the system of the invention can be applied to different rim models from the one shown that is equipped with a central hole. In fact, the system can be applied also to rims of the type without central hole (not shown), because, for their balancing, a multi-hole flange is used in which the bolts are directly screwed in the seats with which the rim is equipped for normally securing it: in this type of rim, the small valve 9 will be directly integrated into the rim casting and will be immediately placed after the quick coupling 11 to keep the tyre pressurised. In this way, it is avoided to screw the small valve 9 to the rim and the insertion of the rim itself into its housing on the wheel will allow inserting the small valve 9 into the quick connection 13.

## Claims

1. Pressure controlling and adjusting system (1) for tyres (3), particularly for motor vehicles,
**characterised in that** it comprises:
- control means (44) for the system (1);
- pressure displaying means (46) for the tyres (3), connected to said control means (44);
- compressor means (38) connected to said control means (44) and to each one of the tyres (3), said compressor means (38) being adapted to blow air and/or gas inside the tyres (3) in order to change their pressure;
- sensor means (34) adapted to perform a pressure check, said sensor means (34) being connected to said control means (44) and to each one of the tyres (3);
- means (32) for expelling air and/or gas from inside the tyres (3) in order to change their pressure; and
- valve means (7) adapted to enable/disable a connection between the system (1) and each one of the tyres (3) in order to blow/suck air and/or gas to/from inside the tyres (3) to change their pressure.

2. System (1) according to Claim 1, **characterised in that** one of the spokes, with which each one of the wheels coated with the tyres (3) is equipped, contains therein a duct (20) adapted to communicate the tyre (3) interior with a circuit to supply air and/or gas of said system (1), said duct (20) being equipped in a lower part thereof with a check ball (14) adapted to maintain the tyre (3) pressure when there is no operating connection with the system (1).

3. System (1) according to Claim 2, **characterised in that** said valve means (7) comprise on an end thereof a connection ball (9) adapted to cooperate with said ball (14) being present on a spoke of every wheel in order to open and close the circuit for supplying compressed air and/or gas, and a coupling (in 100) of the bayonet or thread type on the same end, and on an opposite end (11) a quick coupling, said quick coupling allowing said valve means (7), once having been inserted into a wheel, to engage an internal quick connection (13) of an axle shaft (21) to which the wheel with the tyre (3) is connected.

4. System (1) according to Claim 1, **characterised in that** said valve means (7) further comprise, on an end oriented towards outside of the motor vehicle, a slot (16) to insert a screwdriver therein.

5. System (1) according to Claim 1, **characterised in that** every axle shaft (21) of every motor vehicle wheel is longitudinally drilled inside, and **in that** it is further equipped, on the axle shaft (21) of each steering wheel comprising a tyre (3), with a flexible pressure hose (24) that passes through a joint (22), said pressure hose (24) making air and/or gas pass therethrough and simultaneously keeping the movement of the joint (22) free.

6. System (1) according to Claim 1, **characterised in that** it it further equipped, at an end of each axle shaft (21) of each wheel, with a fixed block or casting (28) connected to a respective axle shaft (21) that instead is rotating, said axle shaft (22) being then downstream connected to motor vehicle engine and gearbox.

7. System (1) according to Claim 1, **characterised in that** said means (32) for expelling air and/or gas are composed of an electric valve connected to said sensor means (34).

8. System (1) according to Claim 1, **characterised in that** said sensor means (34) are composed of a solenoid valve, said solenoid valve (34) being adapted to: manage an inflow of compressed air and/or gas; expel, through the expelling means (32), excess air and/or gas according to driver's requests; and transmit an exact tyre (3) pressure to the control means (44) for displaying the pressure on the displaying means (46).

9. System (1) according to Claim 1, **characterised in that** said compressor means (38) are composed of at least one compressor of the mechanical and/or electric type, said compressor being equipped with an electromagnet and a pulley (40) connected to the motive force through a belt.

10. System (1) according to Claim 1, **characterised in that** said control means (44) are composed of an electric unit equipped with control buttons and displaying means (46) of the display type, to show pressure values of individual tyres and visually and/or acoustically signal when these values exceed, in excess or in defect, the normal design thresholds.

11. System (1) according to Claim 1, **characterised in that** said control means (44) are further equipped with a temperature probe in order to detect an external temperature and automatically change the pressure to improve a tyre (3) adherence to a road.
